# DEMANDE DE BREVET EUROPEEN

(11) **EP 4 516 396 A1**
(43) Date de publication de la demande: **05.03.2025**
(21) Numéro de dépôt: 24190319.4
(22) Date de dépôt: 23.07.2024
(51) Int. Cl.: B01J 20/18, B01J 20/28, B01J 20/30, B01D 53/04, B01J 2/14, B01J 2/16

(54) **ADSORBANT À STRUCTURE HIÉRARCHISÉE**

(30) Priorité: 29.08.2023 FR 2309047
(71) Demandeur: L'AIR LIQUIDE, SOCIETE ANONYME POUR L'ETUDE ET L'EXPLOITATION DES PROCEDES GEORGES CLAUDE, 75007 Paris (FR)
(72) Inventeur: BRANDANI, Federico, 78354 Les Loges en Josas (FR); PULLUMBI, Pluton, 78354 Les Loges en Josas (FR)
(74) Mandataire: Air Liquide

(57) **Abrégé**

Agglomérat adsorbant comprenant une région interne (7) et une superposition de couches de particules adsorbantes (1), les couches de particules adsorbantes (1) se succédant en partant de ladite région interne (7), en enveloppant ladite région interne (7), chacune des particules adsorbantes (1) ayant un volume dit volume particulaire, au moins deux couches de particules adsorbantes (1) constituant des couches hiérarchisées entre elles (2, 3, 4, 5), lesdites au moins deux couches étant les couches de particules adsorbantes (1) les plus éloignées de la région interne (7), agglomérat adsorbant dans lequel les particules adsorbantes (1) constituant chacune des couches hiérarchisées (2, 3, 4) précédant une couche hiérarchisée lui succédant suivante (3, 4, 5) ont un volume particulaire moyen inférieur au volume particulaire moyen des particules adsorbantes (1) constituant la couche hiérarchisée suivante (3, 4, 5), un écart type des valeurs de volume particulaire des particules adsorbantes (1) de chacune des couches hiérarchisées étant inférieur à 20%, de préférence inférieur à 10%, de préférence inférieur à 5% par rapport au volume particulaire moyen des particules adsorbantes (1) constituant ladite couche hiérarchisée.

## Description

L'invention appartient au domaine des matériaux utilisés pour séparer les mélanges gazeux en une fraction fortement adsorbable et une fraction faiblement adsorbable.

L'adsorption est largement utilisée pour purifier ou séparer (fractionner) les gaz. On peut citer le fractionnement de « n » et « iso » paraffines, le fractionnement des xylènes, des alcools, la production d'azote ou d'oxygène à partir d'air atmosphérique, le déballastage en CO2 de gaz de combustion, de gaz de hauts fourneaux. Côté épuration, on trouve les sécheurs, l'épuration d'hydrogène ou d'hélium, l'épuration de gaz riche en méthane, l'adsorption d'impuretés en traces dans de nombreux fluides (arrêt de mercure, NOx, produits soufrés...).

L'augmentation de l'efficacité et la réduction des coûts des procédés de séparation par adsorption passe par l'amélioration des adsorbants mis en oeuvre dans de tels procédés et la réduction des temps de cycle. La nécessité de zones de transfert de matière réduites dans les cycles d'adsorptions rapides impose l'utilisation d'agglomérat adsorbant de plus petite dimension ou de cristaux ou solides adsorbants non-agglomérés de plus petite dimension. Cependant, la diminution de la taille des adsorbants entraîne une augmentation des pertes de charge à travers le lit d'adsorbant et entraîne un risque de fluidisation dudit lit. Les adsorbants de plus petite dimension étant également plus fragiles, leur détérioration est probable au cours de manipulations ou par fluidisation.

Il est donc souhaitable de proposer un adsorbant venant pallier ces inconvénients connus de l'art antérieur.

L'invention a donc pour objet un agglomérat adsorbant comprenant une région interne et une superposition de couches de particules adsorbantes, les couches de particules adsorbantes se succédant en partant de ladite région interne, en enveloppant ladite région interne, chacune des particules adsorbantes ayant un volume dit volume particulaire, au moins deux couches de particules adsorbantes constituant des couches hiérarchisées entre elles, lesdites au moins deux couches étant les couches de particules adsorbantes les plus éloignées de la région interne, agglomérat adsorbant dans lequel les particules adsorbantes constituant chacune desdites couches hiérarchisées précédant une couche hiérarchisée lui succédant suivante ont un volume particulaire moyen inférieur au volume particulaire moyen des particules adsorbantes constituant la couche hiérarchisée suivante, un écart type des valeurs de volume particulaire des particules adsorbantes de chacune des couches hiérarchisées étant inférieur à 20%, de préférence inférieur à 10%, de préférence inférieur à 5% par rapport au volume particulaire moyen des particules adsorbantes constituant la couche hiérarchisée considérée.

Selon un mode de réalisation, les couches hiérarchisées sont concentriques. En particulier, la région interne est une région centrale de l'agglomérat adsorbant.

Selon un mode de réalisation, l'agglomérat adsorbant comprend au moins trois couches hiérarchisées, de préférence au moins quatre couches hiérarchisées.

Selon un mode de réalisation, l'agglomérat adsorbant comprend entre deux et quinze couches hiérarchisées bornes incluses, de préférence entre deux et dix couches hiérarchisées bornes incluses.

Selon un mode de réalisation, l'épaisseur de chacune des couches hiérachisées est comprise entre 30 et 500 micron. En particulier, l'épaisseur d'une couche hiérarchisée la plus éloignée de la région interne est comprise entre 30 et 300 micron. En particulier, l'épaisseur de la couche hiérarchisée précédant la couche hiérarchisée suivante la plus éloignée de la région interne est comprise entre 50 et 400 micron. En particulier, l'épaisseur de la couche hiérarchisée précédant la couche hiérarchisée suivante qui elle-même précède la couche hiérarchisée la plus éloignée de la région interne est comprise entre 100 et 500 micron. En particulier, la couche hiérarchisée la plus éloignée de la région interne, la couche hiérarchisée précédant la couche hiérarchisée suivante la plus éloignée de la région interne et la couche hiérarchisée précédant la couche hiérarchisée suivante qui elle-même précède la couche hiérarchisée la plus éloignée de la région interne ont le même volume ou sensiblement le même volume.

Selon un mode de réalisation, le rapport du volume de chacune des couches hiérarchisées suivant une couche hiérarchisée précédente sur le volume de ladite couche hiérarchisée précédente est compris entre 100% et 350%, de préférence entre 150% et 250%. En particulier, le rapport du volume d'une couche hiérarchisée la plus éloignée de la région interne sur le volume d'une couche hiérarchisée précédant la couche hiérarchisée suivante la plus éloignée de la région interne est compris entre 170% et 250%. En particulier le rapport du volume de la couche hiérarchisée précédant la couche hiérarchisée suivante la plus éloignée de la région interne sur le volume d'une couche hiérarchisée précédant la couche hiérarchisée suivante qui elle-même précède la couche hiérarchisée suivante la plus éloignée de la région interne est compris entre 190% et 220%.

Selon un mode de réalisation, le rapport du volume d'une couche hiérarchisée la plus éloignée de la région interne sur le volume de l'agglomérat adsorbant est compris entre 20% et 90%, de préférence entre 35% et 75%, de préférence entre 45% et 65%.

Les espaces inter-particulaires de la ou des couche(s) hiérarchisée les plus externes recouvrant la ou les couches hiérarchisée(s) précédente(s) sont avantageusement plus larges que les espaces inter-particules de la ou des couches hiérarchisée précédente(s).

Selon un mode de réalisation, les couches hiérarchisées représentent au moins 30%, de préférence au moins 50%, de préférence au moins 60% de l'ensemble des couches de l'agglomérat adsorbant. Le volume moyen des particules adsorbantes augmente de façon continue entre une couche hiérarchisée la plus proche de la région interne et une couche hiérarchisée la plus éloignée de la région interne. La couche hiérarchisée la plus éloignée de la région interne n'est recouverte par aucune autre couche de particules adsorbantes.

Selon un mode de réalisation, la région interne comprend un agrégat de particules adsorbantes. En particulier, aucune hiérarchisation de couche de particules adsorbantes n'est présente dans l'agrégat.

Selon un mode de réalisation, l'agglomérat adsorbant est sensiblement sphérique.

Selon un mode de réalisation, le volume particulaire de chacune des particules adsorbantes comprises dans les couches hiérarchisées est compris entre 4 et 4000 micron³, de préférence entre 40 et 400 micron³. En particulier, le volume particulaire de chacune des particules adsorbantes d'une couche hiérarchisée la plus éloignée de la région interne est compris entre 200 et 4000 micron³. En particulier, le volume particulaire de chacune des particules adsorbantes d'une couche hiérarchisée précédant la couche hiérarchisée suivante la plus éloignée de la région interne est compris entre 60 et 1000 micron³. En particulier, le volume particulaire de chacune des particules adsorbantes d'une couche hiérarchisée précédant la couche hiérarchisée suivante qui elle-même précède la couche hiérarchisée suivante la plus éloignée de la région interne est compris entre 30 et 500 micron³.

Selon un mode de réalisation, les particules adsorbantes sont sensiblement sphériques et les particules adsorbantes constituant chacune desdites couches hiérarchisées précédant une couche hiérarchisée lui succédant suivante ont un diamètre moyen inférieur au diamètre moyen des particules adsorbantes constituant ladite couche hiérarchisée suivante.

Selon un mode de réalisation, les particules adsorbantes comprennent un ou plusieurs cristaux d'adsorbant. En particulier, les particules adsorbantes comprennent une pluralité de cristaux d'adsorbant agglomérés entre eux. Dans un mode de réalisation particulier, chaque particule adsorbante comprise dans les couches hiérarchisées est constituée d'un unique cristal d'adsorbant. Dans ce mode de réalisation, les cristaux d'adsorbant constituant chacune desdites couches hiérarchisées précédant une couche hiérarchisée lui succédant suivante ont un volume moyen inférieur au volume moyen des cristaux d'adsorbant constituant ladite couche hiérarchisée suivante.

Selon un mode de réalisation, les particules adsorbantes comprises dans les couches hiérarchisées comprennent un ou plusieurs solide(s) amorphe(s). En particulier, les particules adsorbantes comprennent une pluralité de solides amorphes agglomérés. Les solides amorphes comprennent notamment un charbon actif, de l'alumine ou d'autres oxydes de métaux et/ou de la silice, telle qu'un gel de silice. Dans un mode de réalisation particulier, chaque particule adsorbante comprise dans les couches hiérarchisées est constitué d'un unique solide amorphe. Dans ce mode de réalisation, les solides amorphes constituant chacune desdites couches hiérarchisées précédant une couche hiérarchisée lui succédant suivante ont un volume moyen inférieur au volume moyen des solides amorphes constituant ladite couche hiérarchisée suivante.

Selon un mode de réalisation, les particules adsorbantes comprennent un liant, en particulier entre 1 et 12 pourcent en masse (wt%) de liant, de préférence entre 4 et 10 pourcent en masse de liant.

Selon un mode de réalisation, l'agglomérat adsorbant comprend un liant entre les particules adsorbantes, en particulier entre 1 et 10 pourcent en masse (wt%) de liant.

Selon un mode de réalisation, l'agglomérat adsorbant est un adsorbant zéolitique, notamment une zéolite FAU, notamment une zéolite X, Y ou A, en particulier échangée au calcium. De préférence, l'agglomérat adsorbant est une zéolite du type LSX.

Selon un mode de réalisation, l'agglomérat adsorbant à une tortuosité comprise entre 1 et 2,2.

L'invention a également pour objet un adsorbeur comprenant un lit d'adsorbant, ledit lit comprenant une pluralité d'agglomérats adsorbant tels que décrits précédemment.

L'invention a également pour objet un procédé de séparation par adsorption d'un mélange gazeux mettant en oeuvre un agglomérat adsorbant tel que décrit précédemment ou un adsorbeur tel que décrit précédemment. Le procédé est notamment un procédé d'adsorption à pression modulée (PSA), en particulier un procédé de type VSA, VPSA. Le procédé peut aussi être un procédé d'adsorption à pression modulée de type RPSA (Rapid PSA), dans lequel la durée du cycle de pression est typiquement inférieure à la minute. Le procédé est notamment un procédé de séparation de l'air, par exemple pour la production d'oxygène.

L'invention a également pour objet l'utilisation de l'agglomérat adsorbant tel que décrit précédemment ou d'un adsorbeur tel que décrit précédemment dans les procédés de fractionnement de « n » et « iso » paraffines, de fractionnement des xylènes, de fractionnement des alcools, les procédés d'épuration d'hydrogène ou d'hélium.

L'invention a également pour objet un procédé de fabrication d'un agglomérat adsorbant, notamment tel que décrit précédemment, comprenant les étapes suivantes :
- fourniture d'une pluralité de particules adsorbantes, chacune des particules adsorbantes ayant un volume dit volume particulaire,
- constitution d'au moins deux lots de particules adsorbantes, chaque lot de particules adsorbantes correspondant à un volume particulaire moyen ciblé des particules qui le constituent, un écart type des valeurs de volume particulaire des particules adsorbantes de chaque lot étant inférieur à 20%, de préférence inférieur à 10%, de préférence inférieur à 5% par rapport au volume particulaire moyen ciblé dudit lot,
- une étape d'agglomération comprenant les sous-étapes :
   a) agglomération des particules adsorbantes d'un premier lot en une première couche de particules adsorbantes,
   b) agglomération des particules adsorbantes du lot suivant en une couche de particules adsorbantes supérieure suivante, recouvrant la première couche de particules adsorbantes, le volume particulaire moyen ciblé de chacun des lots précédant un lot suivant étant inférieur au volume particulaire moyen ciblé dudit lot suivant.

Selon un mode de réalisation, l'étape b) est répétée jusqu'à l'agglomération incluse des particules adsorbantes d'un dernier lot en une dernière couche de particules adsorbantes recouvrant la couche de particules adsorbantes précédente. L'agglomérat adsorbant comprend alors au moins trois couches de particules adsorbantes.

Selon un mode de réalisation, le nombre de lots est compris entre deux et quinze bornes incluses, notamment entre deux et dix bornes incluses.

Selon un mode de réalisation, le volume particulaire des particules adsorbantes fournies est compris entre 4 et 4000 micron³, de préférence entre 40 et 400 micron³. En particulier, le volume particulaire des particules adsorbantes du premier lot est compris entre 4 et 10 micron³. En particulier, le volume particulaire des particules adsorbantes du dernier lot est compris entre 200 et 4000 micron³. En particulier, le volume particulaire des particules adsorbantes du lot précédant le dernier lot est compris entre 60 et 1000 micron³.

Selon un mode de réalisation, le procédé comprend une étape de fourniture d'un agrégat de particules adsorbantes, et l'agglomération (étape d'agglomération) des particules adsorbantes des lots constitués se fait sur l'agrégat. En particulier, aucune hiérarchisation de couche de particules adsorbantes n'est présente dans l'agrégat.

Selon un mode de réalisation, les lots sont constitués par tamisation des particules adsorbantes.

Selon un mode de réalisation, le procédé comprend une étape d'alimentation des particules adsorbantes des lots constitués vers l'étape d'agglomération, l'alimentation se faisant depuis des réservoirs de particules adsorbantes, chaque réservoir contenant un des lots constitués.

Selon un mode de réalisation, l'étape d'agglomération se fait en présence d'humidité ou à sec.

Selon un mode de réalisation, l'étape d'agglomération comprend une sous-étape de préparation de chacun des lots de particules adsorbantes sous la forme d'une dispersion de particules adsorbantes. La dispersion comprend notamment un tensioactif et un agent porogène.

Selon un mode de réalisation, l'étape d'agglomération est faite par fluidisation. En particulier, l'étape d'agglomération comprend les sous-étapes :
a') pulvérisation en lit fluidisé d'une première dispersion préparée, correspondant au premier lot, jusqu'à agglomération des particules adsorbantes de la première dispersion en une première couche de particules adsorbantes,
b') pulvérisation en lit fluidisé d'une dispersion préparée suivante, correspondant au lot suivant, jusqu'à agglomération des particules adsorbantes de la dispersion suivante en une couche de particules adsorbantes suivante recouvrant la première couche de particules adsorbantes.

Selon un mode de réalisation, l'étape b') est répétée jusqu'à l'agglomération incluse des particules adsorbantes d'une dernière dispersion, correspondant au dernier lot, en une dernière couche de particules adsorbantes recouvrant la couche de particules adsorbantes précédente.

Selon un mode de réalisation, l'étape d'agglomération en lit fluidisé est réalisée dans un réacteur dans lequel les dispersions préparées sont alimentées en spray, notamment à une pression comprise entre 1 et 10 bar absolu. La pression au sein du réacteur est notamment comprise entre 1 et 10 bar absolu.

Selon un mode de réalisation, la fluidisation est réalisée par circulation d'un flux gazeux dans le réacteur, ledit flux gazeux étant notamment à une température comprise entre 40 et 500°C.

En alternative, l'étape d'agglomération est faite par plateau tournant. En particulier, l'étape d'agglomération comprend les sous-étapes :
a") disposition sur un plateau d'une première dispersion préparée, correspondant au premier lot, et rotation dudit plateau jusqu'à agglomération des particules adsorbantes de la première dispersion en une première couche de particules adsorbantes,
a1") éventuellement transfert des particules adsorbantes agglomérées dudit plateau vers un autre plateau,
b") disposition sur ledit plateau ou autre plateau d'une dispersion suivante préparée, correspondant au lot suivant, et rotation dudit plateau ou autre plateau jusqu'à agglomération des particules adsorbantes de la dispersion suivante en une couche de particules adsorbantes suivante recouvrant la première couche de particules adsorbantes.

Toutes les dispersions peuvent être agglomérées sur le même plateau. En alternative, les dispersions sont agglomérées chacune sur un plateau différent. L'étape d'agglomération comprend alors la sous-étape de transfert a1").

Selon un mode de réalisation, l'étape b") et éventuellement de l'étape a1") est répétée jusqu'à l'agglomération incluse des particules adsorbantes d'une dernière dispersion, correspondant au dernier lot, en une dernière couche recouvrant la couche précédente.

Selon un mode de réalisation, le procédé comprend une étape de décharge et une étape d'activation de l'agglomérat adsorbant obtenu.
La figure 1 représente un agglomérat adsorbant selon l'invention ;
La figure 2 représente un premier mode de réalisation d'un procédé de fabrication d'un agglomérat adsorbant ;
Les figures 3 et 4 représentent chacune une variante d'un deuxième mode de réalisation du procédé de fabrication.

Un agglomérat adsorbant comprend une région interne 7 et une superposition de couches de particules adsorbantes 1, les couches de particules adsorbantes se succédant en partant de ladite région interne 7, en enveloppant ladite région interne 7, chacune des particules adsorbantes 1 ayant un volume dit volume particulaire, au moins deux couches 2, 3, 4, 5 de particules adsorbantes 1 constituant des couches hiérarchisées entre elles, chacune des couches hiérarchisées étant constituée d'un ensemble de particules adsorbantes 1 ayant un volume particulaire moyen ciblé, un écart type des valeurs de volume particulaire des particules adsorbantes 1 de chacun des ensembles étant inférieur à 20%, de préférence inférieur à 10%, de préférence inférieur à 5% par rapport au volume particulaire moyen ciblé dudit ensemble de particules adsorbantes 1, lesdites au moins deux couches 2, 3, 4, 5 étant les couches les plus éloignées de la région interne 7, caractérisé en ce que dans chacune des couches 2, 3, 4 hiérarchisées recouverte par une couche hiérarchisée suivante 3, 4, 5 qui lui succède, le volume particulaire moyen ciblé est inférieur au volume particulaire moyen ciblé de l'ensemble de particules adsorbantes 1 constituant la couche hiérarchisée suivante 3, 4, 5.

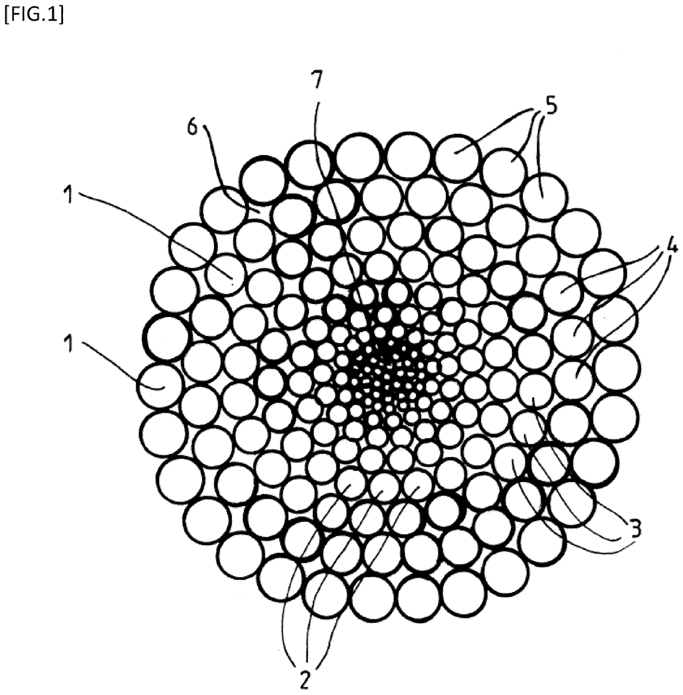

L'agglomérat adsorbant selon l'invention comprend des particules adsorbantes 1 sensiblement sphériques, agencées en couches et une région interne 7, ici une région centrale de l'agglomérat adsorbant. Dans le mode de réalisation de la figure 1, une couche 2 de particules adsorbantes, est recouverte d'une couche suivante supérieure 3 recouvrant la couche inférieure 2, elle-même recouverte d'une couche suivante supérieure 4 recouvrant la couche inférieure 3, elle-même recouverte d'une couche suivante supérieure 5 recouvrant la couche inférieure 4. Les couches 2, 3, 4 et 5 ont un éloignement de la région interne 7 et sont les couches les plus éloignées de la région interne 7. La couche 5 est la couche la plus éloignée de la région interne 7 ou la couche la plus externe de l'agglomérat adsorbant. Les couches 2, 3, 4 et 5 enveloppent la région interne 7. Les couches 2, 3, 4 et 5 se succèdent en partant de ladite région interne 7, c'est-à-dire que, dans le sens allant de la région interne vers une surface externe de l'agglomérat adsorbant, la couche 2 précède la couche 3, qui précède la couche 4 qui elle-même précède la couche 5 la plus éloignée de la région interne 7. Autrement dit, la couche 5 succède à la couche 4, qui elle-même succède à la couche 3, qui elle-même succède à la couche 2.

Au sens de l'invention une couche qui en précède immédiatement une autre est dite « couche précédente » et une couche qui succède immédiatement à une autre est dite « couche suivante ».

L'agglomérat adsorbant de la figure 1 comprend ainsi une superposition de couches 2, 3, 4 et 5 concentriques de particules adsorbantes 1, chacune des particules adsorbante 1 ayant un volume dit volume particulaire. Chacune des couches 2, 3, 4 et 5 correspond à un volume particulaire moyen ciblé de chacune des particules adsorbantes 1 qui y sont comprises, à savoir que les particules adsorbantes 1 comprises dans une des couches 2, 3, 4 et 5 ont chacune un volume particulaire proche du volume particulaire moyen ciblé, le volume particulaire pouvant varier entre les particules adsorbantes 1 avec un écart type des valeurs de volume particulaire des particules 1 de ladite couche, écart type maîtrisé inférieur à 20%, de préférence inférieur à 10%, de préférence inférieur à 5% par rapport au volume particulaire moyen ciblé de ladite couche. La couche est ainsi définie par le volume des particules adsorbantes 1 qui la constituent. Le volume particulaire moyen ciblé correspond à la valeur de volume désirée pour la conception d'une couche.

Les couches 2, 3, 4 et 5 constituent des couches dites hiérarchisées. Les couches hiérarchisées 2, 3, 4, 5 présentent une hiérarchisation entre elles en obéissant à la règle suivante : le volume particulaire moyen ciblé des particules adsorbantes 1 d'une couche hiérarchisée 2, 3, 4 dite inférieure est strictement inférieur au volume particulaire moyen ciblé des particules adsorbantes de la couche hiérarchisée suivante 3, 4, 5 succédant à la couche inférieure 2, 3, 4, la couche hiérarchisée suivante 3, 4, 5 recouvrant ladite couche inférieure 2, 3, 4.

Le volume particulaire moyen d'une couche hiérarchisée est calculé par la somme des volumes de l'ensemble des particules adsorbantes de la couche hiérarchisée, divisée par le nombre de particules adsorbantes dans ladite couche hiérarchisée. L'écart type des volumes particulaires des particules d'une couche hiérarchisée correspond à l'étalement des valeurs de volume particulaire des particules de ladite couche hiérarchisée autour du volume particulaire moyen ciblé de ladite couche hiérarchisée.

Dans le mode de réalisation de la figure 1, la région interne 7 est constituée d'un agrégat de particules adsorbantes en couches ne présentant aucune hiérarchisation particulière entre elles. Les couches 2, 3, 4 et 5 sont agencées autour de l'agrégat en l'enveloppant.

L'agglomération des particules adsorbantes entre elles est optionnellement faite à l'aide d'un liant.

Dans le mode de réalisation représenté, les particules adsorbantes 1 sont formées par une poudre de cristaux, la poudre étant agglomérée afin de former lesdites particules adsorbantes. L'agglomération peut là aussi se faire à l'aide d'un liant. Dans un autre mode de réalisation non-représenté, les particules adsorbantes sont formées par une poudre de solides amorphes, la poudre étant agglomérée afin de former lesdites particules adsorbantes. Les solides amorphes peuvent être constitués d'un charbon actif ou d'un gel de silice. L'agglomération peut là encore se faire à l'aide d'un liant.

Les particules adsorbantes 1 comprenant des cristaux ou solides amorphes agglomérés sont aussi, lorsqu'elle sont sensiblement sphériques, appelées billes d'adsorbant ou « adsorbant beads » en anglais. L'agglomérat adsorbant à porosité hiérarchisée selon l'invention comprend alors une agglomération de billes d'adsorbant agencées en couches concentriques, chacune des-dites billes comprenant une agglomération de cristaux ou solides amorphes. Dans un mode de réalisation où chaque particule adsorbante au sens de l'invention est constituée d'un unique cristal d'adsorbant, l'agglomérat adsorbant à porosité hiérarchisée comprend une agglomération de cristaux agencés en couches. Les couches sont hiérarchisées entre elles en obéissant à la règle suivante : le volume moyen ciblé des cristaux d'une couche inférieure est inférieur au volume moyen ciblé des cristaux de la couche suivante, recouvrant ladite couche inférieure.

Les espaces inter-particules 6 de la ou des couche(s) les plus éloignées de la région interne 7, recouvrant la ou les couches inférieure(s) sont avantageusement plus larges que les espaces inter-particules de la ou des couches inférieure(s). L'espace inter-particulaire mesure l'espace entre les particules adsorbantes 1. Les espaces inter-particulaires des couches les plus externes débouchent en particulier sur le réseau de pores des particules adsorbantes, notamment des mésopores et micropores. Ainsi, le taux de diffusion des molécules entre les particules adsorbantes des couches les plus externes est optimisé. Parce que les couches les plus externes représentent en général la majorité du volume de l'agglomérat adsorbant, le transfert de matière s'en trouve fortement amélioré. Dans le cas de couches hiérarchisées concentriques, les propriétés de transfert de matière de l'adsorbant sont homogénéisées, grâce à la géométrie de l'agglomérat adsorbant obéissant à une symétrie centrale. Le plus petit volume particulaire des couches inférieures permet de bénéficier du plus haut taux d'adsorption caractéristique des particules adsorbantes de petite taille et ainsi d'une plus grande sélectivité. Grâce au volume élevé de l'agglomérat adsorbant selon l'invention, relativement aux particules adsorbantes 1 le constituant, les inconvénients provenant de l'usage de ces particules adsorbantes 1 de petite taille connu de l'art antérieur, liés à l'augmentation des pertes de charges et/ou liés à la fluidisation, sont évités. Un compromis entre des propriétés apparemment inconciliables est ainsi trouvé.

Le volume particulaire au sens de l'invention correspond au volume macroscopique d'une particule adsorbante 1 tel qu'il peut être observé et mesuré au microscope, c'est-à-dire incluant les interstices entre les éléments constituants ladite particule adsorbante, notamment les espaces entre les cristaux ou entre les solides amorphes. Le volume de l'agglomérat adsorbant au sens de l'invention correspond au volume macroscopique de l'agglomérat adsorbant, c'est-à-dire incluant les espaces inter-particulaires 6. Le volume moyen des particules adsorbantes 1 d'une couche inférieure est inférieur au volume moyen des particules adsorbantes 1 de la couche suivante, recouvrant ladite couche inférieure. Autrement dit une dimension caractéristique moyenne des particules adsorbantes 1 de la couche inférieure est inférieure à une dimension caractéristique moyenne des particules adsorbantes 1 de la couche suivante.

L'agglomérat adsorbant selon l'invention peut être un adsorbant zéolitique, notamment une zéolite FAU, et de préférence une zéolite X. Par exemple, la zéolite X possède un ratio silice sur alumine inférieur à 1,15, de préférence inférieur à 1,1 ou sensiblement égal à 1,0.

Dans le mode de réalisation de la figure 1, il s'agit d'un adsorbant de type faujasite échangé au calcium (Ca), adapté pour être utilisé après activation dans un lit d'adsorbant d'un adsorbeur pour un procédé de séparation par adsorption à pression modulée, de type VSA. Cependant, l'agglomérat adsorbant selon l'invention peut être utilisé dans tout procédé d'adsorption, par exemple à pression modulée (PSA pour l'anglais « Pressure swing adsorption »), en particulier un procédé de type VSA (pour « Vacuum swing adsorption » ou VPSA). Le procédé peut aussi être un procédé d'adsorption à pression modulée de type RPSA (Rapid PSA), dans lequel la durée du cycle de pression est typiquement inférieure à la minute.

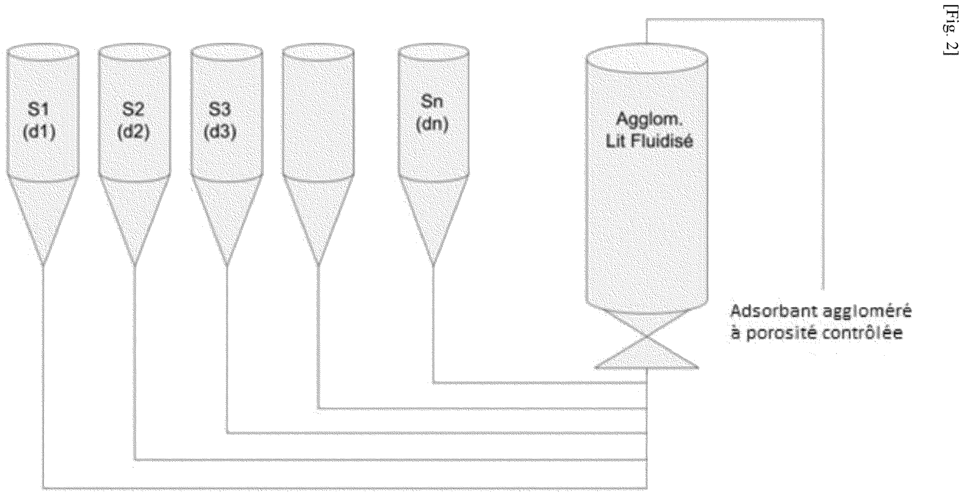

La figure 2 est une représentation schématique d'un exemple de procédé de fabrication par agglomération en lit fluidisé d'un agglomérat adsorbant à porosité hiérarchisée selon l'invention.

Une quantité de particules adsorbantes 1 est fournie, et les particules adsorbantes sont réparties en fonction de leur volume particulaire, de sorte à constituer des lots S1, S2, S3, ... Sn. Les particules adsorbantes 1 comprises dans chacun des lots S1, S2, S3, ... Sn ont toutes un volume particulaire similaire et proche d'un volume particulaire moyen ciblé, qui caractérise ledit lot considéré. L'écart type des valeurs de volume particulaire des particules adsorbantes 1 de chacun des lots S1, S2, S3, ... Sn constitué est maîtrisé de sorte à être inférieur à 20%, voire inférieur à 10%, ou même inférieur à 5% par rapport au volume particulaire moyen ciblé. Le reste du procédé de fabrication consiste à agglomérer les particules adsorbantes 1 ainsi réparties en lots de manière hiérarchisée. Les lots S1, S2, S3, ... Sn sont classés dans cet ordre par volume particulaire ciblé moyen croissant.

Dans l'exemple de la figure 2, les lots S1, S2, S3, ... Sn sont préparés sous forme de dispersions d1, d2, d3, ..., dn avec un tensioactif et un agent porogène. Les dispersions d1, d2, d3, ..., dn ainsi préparées sont ensuite alimentées les unes après les autres dans un dispositif de pulvérisation, par exemple un réservoir ou réacteur de fluidisation, dispositif dans lequel les dispersions d1, d2, d3, ..., dn sont pulvérisées en lit fluidisé.

La première dispersion d1 est pulvérisée en lit fluidisé le temps le temps nécessaire pour que les particules adsorbantes 1 comprises dans la première dispersion d1 pulvérisée s'agglomèrent entre elles de sorte à former une première couche 2 de l'agglomérat adsorbant. L'agglomération de la première couche 2 peut être faite sur un agrégat. Ensuite, la deuxième dispersion d2 est à son tour pulvérisée en lit fluidisé le temps nécessaire pour que les particules adsorbantes 1 comprises dans la deuxième dispersion d2 s'agglomèrent en une deuxième couche 3, recouvrant la première couche 2. Ainsi de suite jusqu'à l'agglomération des particules d'une dernière dispersion en une dernière couche 5, recouvrant la couche précédente 4. La dernière couche 5 constitue la couche externe (ou la couche la plus externe) de l'agglomérat adsorbant. Un agglomérat adsorbant en couches concentriques de particules adsorbantes, dans lequel le volume particulaire diminue de façon constante de la couche externe aux couches plus internes, est ainsi obtenu.

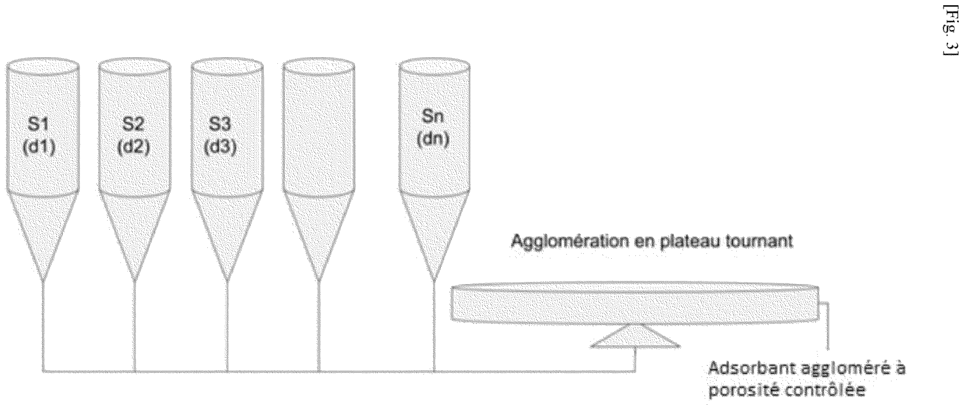

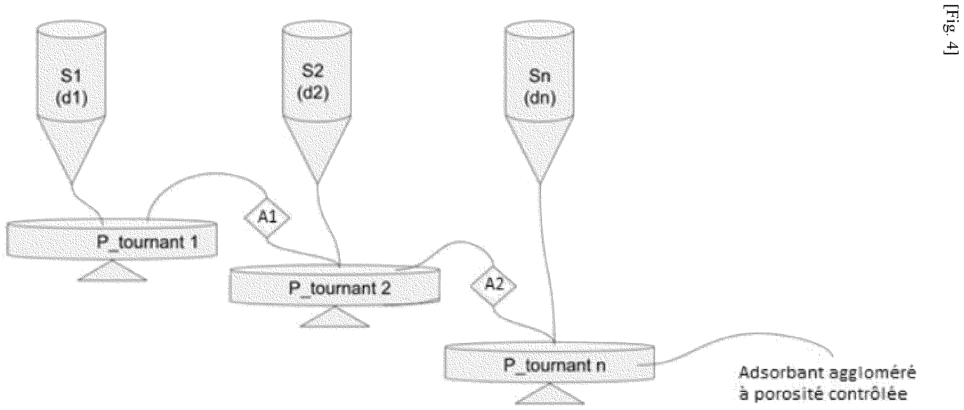

La figure 3 est une représentation schématique d'un autre exemple de procédé de fabrication d'un agglomérat adsorbant à porosité hiérarchisée selon l'invention, par agglomération en plateau rotatif. Le procédé est similaire à celui de la figure 2, mais diffère en ce que les dispersions d1, d2, d3, ..., dn sont alimentées, dans le même ordre, successivement les unes après les autres, sur un ou des plateau(x) rotatif(s) pour agglomération. Le ou les plateau(x) rotatif(s) est ou sont mis en rotation le temps nécessaire pour l'agglomération des particules d'une dispersion donnée en couche, le cas échéant recouvrant la couche précédente. Tous les lots S1, S2, S3, ... Sn peuvent être agglomérés sur un seul et même plateau rotatif comme dans l'exemple de la figure 3, ou bien chacun des lots S1, S2, S3, ... Sn peut être aggloméré sur un plateau rotatif différent (P_tournant 1, P_tournant 2, ... P_tournant n), comme dans l'exemple de la figure 4, avec le cas échéant une étape de transfert A1, A2 des particules adsorbantes 1 précédemment agglomérées sur un plateau rotatif donné vers le plateau rotatif suivant.

## Revendications

1. Agglomérat adsorbant comprenant une région interne (7) et une superposition de couches de particules adsorbantes (1), les couches de particules adsorbantes (1) se succédant en partant de ladite région interne (7), en enveloppant ladite région interne (7), chacune des particules adsorbantes (1) ayant un volume dit volume particulaire, au moins deux couches de particules adsorbantes (1) constituant des couches hiérarchisées entre elles (2, 3, 4, 5), lesdites au moins deux couches étant les couches de particules adsorbantes (1) les plus éloignées de la région interne (7), agglomérat adsorbant dans lequel les particules adsorbantes (1) constituant chacune desdites couches hiérarchisées (2, 3, 4) précédant une couche hiérarchisée lui succédant suivante (3, 4, 5) ont un volume particulaire moyen inférieur au volume particulaire moyen des particules adsorbantes (1) constituant ladite couche hiérarchisée suivante (3, 4, 5), un écart type des valeurs de volume particulaire des particules adsorbantes (1) de chacune des couches hiérarchisées étant inférieur à 20%, de préférence inférieur à 10%, de préférence inférieur à 5% par rapport au volume particulaire moyen des particules adsorbantes (1) constituant ladite couche hiérarchisée.

2. Agglomérat adsorbant selon la revendication précédente, dans lequel les couches hiérarchisées (2, 3, 4, 5) sont concentriques.

3. Agglomérat adsorbant selon l'une des revendications précédentes, comprenant au moins trois couches hiérarchisées (2, 3, 4, 5), de préférence au moins quatre couches hiérarchisées (2, 3, 4, 5).

4. Agglomérat adsorbant selon l'une des revendications précédentes, dans lequel les couches hiérarchisées (2, 3, 4, 5) représentent au moins 30%, de préférence au moins 50%, de préférence au moins 60% de l'ensemble des couches de l'agglomérat adsorbant.

5. Agglomérat adsorbant selon l'une des revendications précédentes, dans lequel la région interne (7) comprend un agrégat de particules adsorbantes (1), agrégat dans lequel aucune hiérarchisation de couche de particules adsorbantes (1) n'est présente.

6. Agglomérat adsorbant selon l'une des revendications précédentes, l'agglomérat adsorbant étant sensiblement sphérique.

7. Agglomérat adsorbant selon l'une des revendications précédentes, dans lequel chaque particule adsorbante (1) comprise dans les couches hiérarchisées (2, 3, 4, 5) est constituée d'un unique cristal d'adsorbant ou d'un unique solide amorphe.

8. Agglomérat adsorbant selon l'une des revendications précédentes, l'agglomérat adsorbant étant un adsorbant zéolitique, notamment une zéolite FAU, notamment une zéolite X, Y ou A.

9. Adsorbeur comprenant un lit d'adsorbant, ledit lit comprenant une pluralité d'agglomérats adsorbant selon l'une des revendications précédentes.

10. Procédé de séparation par adsorption d'un mélange gazeux mettant en oeuvre un agglomérat adsorbant selon l'une des revendications 1 à 8 ou un adsorbeur selon la revendication 9.

11. Procédé de séparation selon la revendication précédente, le procédé étant un procédé de séparation de l'air.

12. Utilisation d'un agglomérat adsorbant selon l'une des revendications 1 à 8 ou d'un adsorbeur selon la revendication 9 dans les procédés de fractionnement de « n » et « iso » paraffines, de fractionnement des xylènes, des alcools, dans les procédés d'épuration d'hydrogène ou d'hélium.

13. Procédé de fabrication d'un agglomérat adsorbant comprenant les étapes suivantes :
- fourniture d'une pluralité de particules adsorbantes (1), chacune des particules adsorbantes (1) ayant un volume dit volume particulaire,
- constitution d'au moins deux lots de particules adsorbantes (1), chaque lot de particules adsorbantes (1) correspondant à un volume particulaire moyen ciblé des particules qui le constituent, un écart type des valeurs de volume particulaire des particules adsorbantes de chaque lot étant inférieur à 20%, de préférence inférieur à 10%, de préférence inférieur à 5% par rapport au volume particulaire moyen ciblé dudit lot,
- une étape d'agglomération comprenant les sous-étapes :
a) agglomération des particules adsorbantes (1) d'un premier lot en une première couche (2) de particules adsorbantes (1),
b) agglomération des particules adsorbantes (1) du lot suivant en une couche (3) de particules adsorbantes (1) supérieure suivante, recouvrant la première couche de particules adsorbantes (1),
le volume particulaire moyen ciblé de chacun des lots précédant un lot suivant étant inférieur au volume particulaire moyen ciblé dudit lot suivant.

14. Procédé de fabrication selon la revendication précédente, dans lequel l'étape d'agglomération est faite par fluidisation ou par plateau tournant.
